# EUROPEAN PATENT APPLICATION

(11) **EP 4 033 578 A1**
(43) Date of publication of application: **27.07.2022**
(21) Application number: 22151425.0
(22) Date of filing: 13.01.2022
(51) Int. Cl.: H01M 10/0525, H01M 50/103, H01M 50/15, H01M 50/342

(54) **SEALING PLATE INCLUDING GAS RELEASE VENT AND SECONDARY BATTERY USING SEALING PLATE**

(30) Priority: 25.01.2021 JP 2021009448
(71) Applicant: Prime Planet Energy & Solutions, Inc., Chuo-ku Tokyo 103-0022 (JP)
(72) Inventor: YONEYAMA, Akihiro, Tokyo, 103-0022 (JP); WAKIMOTO, Ryoichi, Tokyo, 103-0022 (JP); MARUBAYASHI, Hironori, Tokyo, 103-0022 (JP)
(74) Representative: Kuhnen & Wacker Patent- und Rechtsanwaltsbüro PartG mbB

(57) **Abstract**

The present disclosure provides a sealing plate including a gas release vent capable of suppressing scattering of a metallic fragment during activation. A gas release vent of a sealing plate disclosed herein includes: a base portion with a flat plate shape; a thin portion of which a thickness is thinner than a thickness of the base portion; a groove portion formed in the thin portion; and a valve element formed inside the groove portion. In addition, the groove portion has a remaining portion which is a region with a larger remaining thickness as compared to another region (a fracture portion) of the groove portion. Furthermore, the remaining portion of the groove portion is formed in a region including one intersection point among two intersection points where a straight line which passes a center of the gas release vent and which extends in a short-side direction of the sealing plate intersects the groove portion with the approximately annular shape. Accordingly, in addition to suppressing scattering of the valve element upon activation of the gas release vent, the remaining portion formed as an anti-scattering measure of the valve element can also be prevented from inhibiting the operation of the gas release vent.

## Description

### BACKGROUND

### 1. Technical Field

The present disclosure relates to a sealing plate including a gas release vent and to a secondary battery using the sealing plate.

### 2. Description of the Related Art

Secondary batteries such as lithium-ion secondary batteries include, for example, an electrode body and a battery case housing the electrode body. The battery case includes an outer package which is a container of which one face is an opening and a sealing plate which closes the opening of the outer package. In a secondary battery of this type, the battery case (typically, the sealing plate) may be provided with a gas release vent in order to improve safety. The gas release vent refers to a vent designed to discharge gas inside the battery case. The gas release vent is constructed to open at pressure determined in advance when a large amount of gas is suddenly generated inside the battery case. For example, a square storage battery described in JP2012-252809 has a lid member (a sealing plate) in which a base portion forming an upper surface, a peripheral wall portion forming a recessed portion which is recessed from the base portion, and a safety valve (a gas release vent) which is connected to and supported by an inner peripheral wall surface of the peripheral wall portion. In JP2012-252809, an aluminum flat plate is pressed to form the recessed portion and the safety valve with a thin film shape is formed in a bottom portion of the recessed portion.

### SUMMARY

In recent years, there is an increasing demand for safety in secondary batteries. As a result of a study conducted by the present inventors to meet the demand, it was found that with a conventional gas release vent configured as described above, there is a possibility that a metallic fragment may scatter in all directions when the gas release vent is activated (opens) due to a rise in internal pressure of the case. In addition, a scattered metallic fragment coming into contact with an electrode terminal or the like may cause an external short circuit or the like to occur. The technique disclosed herein has been devised in consideration of the circumstances described above and an object thereof is to provide a sealing plate including a gas release vent and a secondary battery capable of suppressing scattering of a metallic fragment upon activation.

In order to achieve the object described above, the technique disclosed herein provides a sealing plate configured as described below.

The sealing plate disclosed herein is a sealing plate for a secondary battery, the sealing plate being a plate-shaped member with an approximately rectangular shape in a plan view and which closes an opening of an outer package and which is provided with a gas release vent. The gas release vent of the sealing plate includes: a base portion with a flat plate shape; a thin portion of which a thickness is thinner than a thickness of the base portion; a groove portion with an approximately annular shape formed on a surface of the thin portion; and a valve element formed inside the groove portion with the approximately annular shape. In addition, in the sealing plate disclosed herein, the groove portion has a remaining portion which is a region with a larger remaining thickness as compared to another region of the groove portion. Furthermore, the remaining portion is formed in a region including one intersection point among two intersection points where a straight line which passes a center of the gas release vent and which extends in a short-side direction of the sealing plate intersects the groove portion.

With a gas release vent in which a groove portion with the approximately annular shape is formed on a surface of the thin portion as described above, when internal pressure of a case reaches prescribed pressure, a fracture of the thin portion occurs along the groove portion with the approximately annular shape. At this point, when the internal pressure of the case rises suddenly, the thin portion fractures at once along an entire periphery of the groove portion and the valve element present inside the groove portion is completely detached from the base portion. In addition, there is a possibility that gas ejected from inside the battery case may cause the detached valve element (a metallic fragment) to scatter in all directions. By contrast, in the sealing plate disclosed herein, the groove portion is provided with the remaining portion which has a larger remaining thickness as compared to another region of the groove portion. Accordingly, the thin portion can be prevented from fracturing at once along the entire periphery of the groove portion and a state where the valve element is connected to the base portion via the remaining portion can be maintained. As a result, scattering of the valve element of the gas release vent as a metallic fragment can be suppressed and a contribution can be made toward improving safety of a secondary battery.

When the remaining portion is formed in a part of the groove portion, since a continuous fracture of the thin portion along the groove portion stops at the remaining portion, there is a possibility that the gas release vent will fail to open sufficiently depending on a fracture start position. By contrast, in the sealing plate disclosed herein, the remaining portion is formed in a region including one intersection point among two intersection points where a straight line which passes a center of the gas release vent and which extends in the short-side direction of the sealing plate intersects the groove portion with the approximately annular shape. Accordingly, a fracture of the thin portion can be started at a position that is farthest from the remaining portion in a peripheral direction of the groove portion. As a result, a fracture of the thin portion along the groove portion can be created so that only the remaining portion is connected to the base portion in the gas release vent after activation. As described above, according to the sealing plate disclosed herein, not only can scattering of the valve element upon activation of the gas release vent be suppressed but the remaining portion formed as an anti-scattering measure of the valve element can also be prevented from inhibiting activation of the gas release vent.

In addition, in a preferable aspect of the sealing plate disclosed herein, a protective tape is affixed so as to cover the gas release vent. Accordingly, damage and deterioration of the gas release vent due to corrosive foreign objects or the like can be prevented.

In addition, in a preferable aspect of the sealing plate disclosed herein, a length L₁ of the protective tape affixed to a region outside of the gas release vent in the short-side direction of the sealing plate is shorter than a length L₂ of the protective tape affixed to a region outside of the gas release vent in a long-side direction of the sealing plate. By adjusting an affixing margin of the protective tape so as to satisfy the dimensional relationship described above, the protective tape can be peeled off in an appropriate manner when the gas release vent is activated.

In a preferable aspect of the sealing plate disclosed herein, a gap with a height of 1 mm or more is formed between the thin portion and the protective tape. Accordingly, the protective tape can be prevented from being peeling off by an expansive deformation of the gas release vent during normal use before desired internal pressure of the case is reached.

In a preferable aspect of the sealing plate disclosed herein, a length of the remaining portion in a peripheral direction is 1/8 or more and 3/8 or less of a length of an entire periphery of the groove portion. Accordingly, scattering of the valve element can be appropriately suppressed without significantly inhibiting the activation of the gas release vent.

In a preferable aspect of the sealing plate disclosed herein, a remaining thickness of the remaining portion is thicker than the thickness of the thin portion that is adjacent to the remaining portion. Accordingly, scattering of the valve element can be more appropriately suppressed.

In a preferable aspect of the sealing plate disclosed herein, a thickness of the thin portion that is adjacent to the remaining portion is thicker than the thickness of the thin portion that is adjacent to another region of the groove portion. Accordingly, scattering of the valve element can be more appropriately suppressed.

In addition, in a preferable aspect of the sealing plate disclosed herein, a planar shape of the thin portion is approximately annular, a thickness of the valve element is equal to or greater than the thickness of the thin portion, and a second moment of area of the valve element is larger than a second moment of area of the thin portion. Accordingly, since stress applied to the gas release vent when internal pressure of the case rises concentrates on the thin portion around the groove portion, a fracture of the thin portion along the groove portion more readily occurs.

Furthermore, as another aspect of the technique disclosed herein, a secondary battery is provided. The secondary battery disclosed herein is a secondary battery including an electrode body including a positive electrode and a negative electrode and a battery case housing the electrode body. The battery case of the secondary battery includes an outer package which is a flat square container of which one face is an opening and a sealing plate with a rectangular planar shape which closes the opening of the outer package. In addition, the sealing plate is the sealing plate configured as described above. According to the secondary battery disclosed herein, not only can scattering of the valve element be suppressed but the remaining portion formed as an anti-scattering measure of the valve element can also be prevented from inhibiting the operation of the gas release vent.

### BRIEF DESCRIPTION OF THE DRAWINGS

FIG. 1 is a perspective view schematically showing a sealing plate according to a first embodiment;
FIG. 2 is a plan view schematically showing the sealing plate according to the first embodiment;
FIG. 3 is a longitudinal sectional view schematically showing the sealing plate according to the first embodiment;
FIG. 4 is a perspective view schematically showing a secondary battery according to the first embodiment;
FIG. 5 is a plan view schematically showing a sealing plate according to a second embodiment;
FIG. 6 is a longitudinal sectional view schematically showing the sealing plate according to the second embodiment;
FIG. 7 is a longitudinal sectional view schematically showing a sealing plate according to a third embodiment;
FIG. 8 is a longitudinal sectional view schematically showing a sealing plate according to a fourth embodiment;
FIG. 9 is a longitudinal sectional view schematically showing a sealing plate according to a fifth embodiment; and
FIG. 10 is a plan view schematically showing the sealing plate according to the fifth embodiment.

### DETAILED DESCRIPTION

Hereinafter, some preferable embodiments of the technique disclosed herein will be described with reference to the drawings. It should be noted that, with the exception of matters specifically mentioned in the present specification, matters required to carry out the technique disclosed herein (for example, materials of an electrode body, an electrolyte solution, and the like) can be understood to be design matters of a person with ordinary skill in the art based on the prior art in the relevant technical field. In other words, the technique disclosed herein can be implemented based on the contents disclosed in the present specification and common general technical knowledge in the relevant field.

It should be noted that, in the drawings referred to in the following description, members and portions that produce same effects will be denoted by same reference signs. It should also be noted that dimensional relationships (a length, a width, a thickness, and the like) shown in the respective drawings do not reflect actual dimensional relationships. In addition, in the drawings, it is assumed that a reference sign X denotes a "width direction", a reference sign Y denotes a "depth direction", and a reference sign Z denotes a "height direction". However, it should be noted that such directions have merely been determined for the sake of illustration and are not intended to limit aspects of installation when a secondary battery is in use or when the secondary battery is being manufactured. Furthermore, a notation of "A to B" representing a numerical value range in the present specification is to mean "A or more and B or less" but also includes the meanings of "favorably more than A" and "favorably less than B".

### Sealing plate

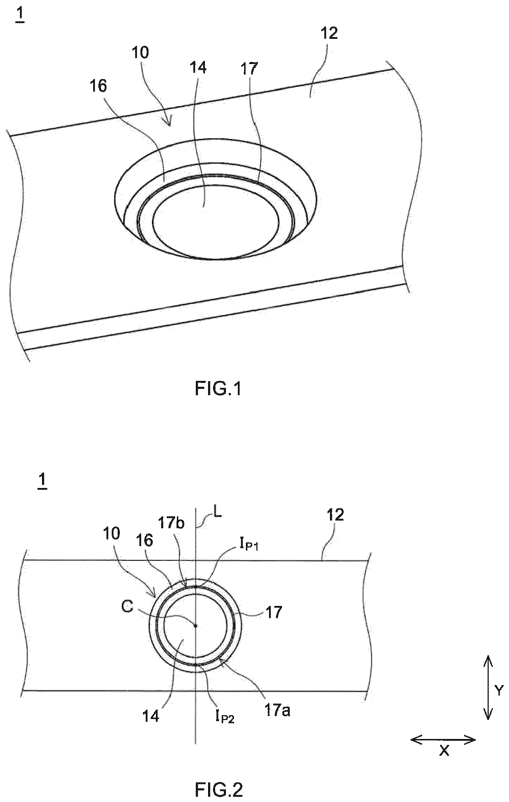

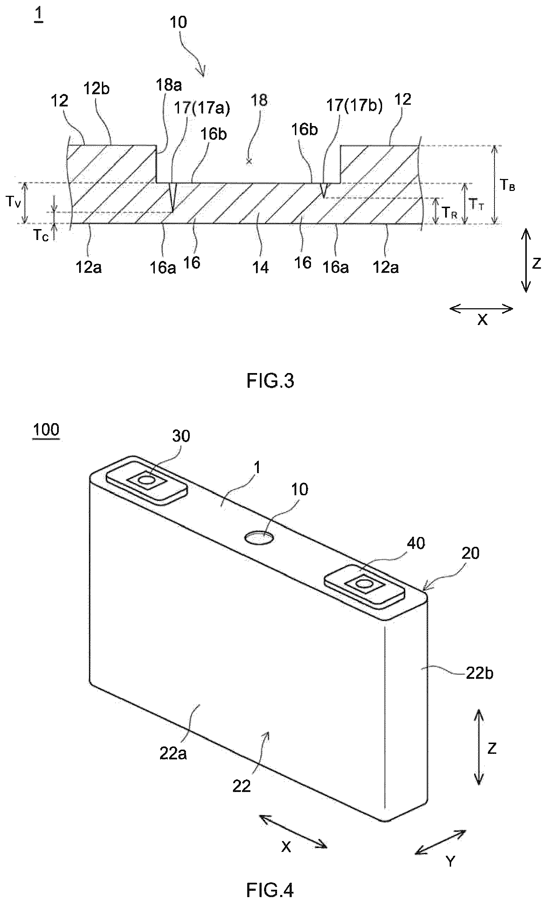

Hereinafter, an embodiment of the sealing plate disclosed herein will be described with reference to FIGS. 1 to 3. FIG. 1 is a perspective view schematically showing a sealing plate according to a first embodiment. FIG. 2 is a plan view schematically showing the sealing plate according to the first embodiment. FIG. 3 is a longitudinal sectional view schematically showing the sealing plate according to the first embodiment. In the present specification, for explanatory convenience, a surface opposing an electrode body inside a battery case when the sealing plate is attached to a secondary battery will be referred to as a "first surface" and a direction toward the electrode body will be referred to as a "first direction". On the other hand, a surface to be exposed to the outside of the battery case when the sealing plate is attached to the secondary battery will be referred to as a "second surface" and a direction toward the outside of the electrode body will be referred to as a "second direction". In addition, the "first direction" refers to downward in a height direction Z in FIG. 3 and the "second direction" refers to upward in the height direction Z in FIG. 3.

A sealing plate 1 according to the present embodiment is a component for a secondary battery (a secondary battery component) which constitutes one side wall of a battery case of the secondary battery. In the present specification, a "secondary battery" is a term that refers to repetitively chargeable and dischargeable power storage devices in general and is a concept that encompasses so-called storage batteries (chemical batteries) such as a lithium-ion secondary battery and a nickel hydride battery as well as capacitors (physical batteries) such as an electrical double layer capacitor. In other words, the sealing plate 1 according to the present embodiment is not limited to a secondary battery of a specific type and the sealing plate 1 can be used without any particular limitations in secondary batteries in general in which gas may be created when a failure such as an overcharge occurs.

The sealing plate 1 according to the present embodiment is a plate-shaped member with an approximately rectangular planar shape. Although details will be provided later, the sealing plate 1 is a plate-shaped member which closes an opening of an outer package that is a component of a battery case of the secondary battery. Materials with a prescribed strength can be used without any particular limitations as the sealing plate 1. Examples of a raw material of the sealing plate 1 include a metal material of which a main component is aluminum and a metal material of which a main component is iron. As an example, from the perspective of ease of design, moldability, and the like in consideration of working pressure of a gas release vent 10, the sealing plate 1 is favorably constituted of a metal material of which a main component is aluminum. "A metal material of which a main component is aluminum" according to the present specification is a metal material which contains 90 weight percent or more of aluminum and which includes aluminum and aluminum alloys.

As shown in FIG. 1, the sealing plate 1 according to the present embodiment includes the gas release vent 10. The gas release vent 10 according to the present embodiment includes a base portion 12, a thin portion 16, a groove portion 17 with the approximately annular shape, and a valve element 14. In addition, as shown in FIG. 3, the groove portion 17 has a remaining portion 17b which is a region with a larger remaining thickness as compared to another region (a fracture portion 17a) of the groove portion 17. Furthermore, as shown in FIG. 2, the remaining portion 17b of the groove portion 17 is formed in a region including one intersection point IP₁ among two intersection points IP₁ and IP₂ where a straight line L which passes a center C of the gas release vent 10 and which extends in a short-side direction of the sealing plate 1 (a depth direction Y) intersects the groove portion 17 with the approximately annular shape. According to the sealing plate 1 configured as described above, not only can scattering of a metallic fragment (the valve element 14) during activation of the gas release vent 10 be suppressed but inhibition of the operation of the gas release vent 10 can be prevented. Hereinafter, a specific configuration of the gas release vent 10 of the sealing plate 1 according to the present embodiment will be described.

### (1) Base portion

The base portion 12 is a region molded in a flat plate shape. The gas release vent 10 according to the present embodiment is molded by pressing a flat plate-shaped metal member. At this point, a region where the valve element 14 and the thin portion 16 to be described later are not formed becomes the base portion 12. In addition, the base portion 12 becomes a junction between the gas release vent 10 and another region of the sealing plate 1. Specifically, in the present embodiment, by directly subjecting the sealing plate 1 to pressing, the sealing plate 1 in which the base portion 12 of the gas release vent 10 and another region of the sealing plate 1 are seamlessly integrated is molded. Accordingly, an electrolyte solution can be reliably prevented from leaking from a joining portion of the gas release vent 10. In addition, since a step of joining the gas release vent 10 to the sealing plate 1 can be omitted, a contribution toward improving work efficiency can also be made. However, the technique disclosed herein is not limited to an aspect in which the base portion 12 of the gas release vent 10 and the sealing plate 1 are integrated. In other words, a base portion of a gas release vent having been separately molded and another region of a sealing plate may be joined to each other. In this case, means can be considered in which an opening is provided on the sealing plate and, after fitting the gas release vent into the opening, the base portion of the gas release vent and the sealing plate are welded to each other. An aspect in which a gas release vent is separately molded in this manner is advantageous in that the gas release vent can be relatively readily molded. In addition, another advantage is that sales and distribution of the gas release vent after molding can be readily performed.

Moreover, a thickness T_{B} of the base portion 12 can be set to 1 mm to 10 mm and to 1 mm to 5 mm. As the thickness T_{B} of the base portion 12 increases, durability of the base portion 12 with respect to a rise in internal pressure of the case tends to improve. On the other hand, as the thickness T_{B} of the base portion 12 decreases, a processing load during molding of the valve element 14 and the thin portion 16 tends to decrease. However, the thickness T_{B} of the base portion 12 is not particularly limited and can be adjusted as appropriate in consideration of a thickness of the sealing plate 1 or the like.

### (2) Thin portion

The thin portion 16 is a region of which a thickness is thinner than the thickness T_{B} of the base portion 12 (T_{T} < T_{B}). As shown in FIG. 3, the gas release vent 10 according to the present embodiment is provided with a recessed portion 18 which is recessed from a second surface 12b of the base portion 12, and the thin portion 16 and the valve element 14 are formed on a bottom surface of the recessed portion 18. In addition, an annular peripheral wall 18a rises approximately vertically from an outer peripheral edge of the thin portion 16. In other words, the gas release vent 10 according to the present embodiment has the recessed portion 18 which is enclosed by the thin portion 16, the valve element 14, and the peripheral wall 18a. Furthermore, as shown in FIG. 2, a planar shape of the thin portion 16 in the present embodiment is an annular shape. A thickness T_{T} of the annular thin portion 16 is approximately the same in a peripheral direction. While an outer peripheral edge of the annular thin portion 16 may be an elliptical shape, the outer peripheral edge is more favorably an approximately circular shape. Accordingly, a variation in pressure (working pressure) at which the gas release vent 10 opens can be suppressed. It should be noted that an "approximately circular shape" according to the present specification refers to a circular shape of which a ratio between a long diameter and a short diameter is 90% or higher (favorably 95% or higher and more favorably 98% or higher). In addition, in consideration of an inner volume, an environment of usage, and the like of the battery case of the secondary battery, the thin portion 16 is favorably designed so as to stably fracture along a groove portion 17 to be described later. As an example, the thickness T_{T} of the thin portion 16 favorably ranges from 0.1 mm to 0.6 mm and more favorably ranges from 0.3 mm to 0.5 mm. Accordingly, when internal pressure of the case reaches desired pressure, the thin portion 16 can be stably fractured along the groove portion 17.

### (3) Valve element

The valve element 14 is a region formed inside the groove portion 17 formed in an approximately annular. As shown in FIGS. 1 and 2, in this case, a shape of the valve element 14 in a plan view is an approximately circular shape. In other words, the approximately circular valve element 14 is formed on an inner side in a radial direction of the thin portion 16 which has an annular shape in a plan view. In addition, a thickness Tv of the valve element 14 is not particularly limited and can be appropriately adjusted. However, from the perspective of causing a fracture in the thin portion 16 to readily occur, the thickness Tv of the valve element 14 is favorably equal to or thicker than the thickness T_{T} of the thin portion 16. For example, in the sealing plate 1 according to the present embodiment, the gas release vent 10 is formed in which the thickness T_{T} of the thin portion 16 and the thickness Tv of the valve element 14 are approximately the same. When the thickness T_{T} of the thin portion 16 and the thickness Tv of the valve element 14 are set approximately the same in this manner, since the gas release vent 10 can be relatively readily molded, a contribution can be made toward improving manufacturing efficiency.

### (4) Groove portion

In the present embodiment, the groove portion 17 having approximately annular shape is formed on a surface of the thin portion 16. A portion in which the groove portion 17 is formed becomes a fragile portion of which strength is particularly low among the thin portion 16. Therefore, in the present embodiment, when the internal pressure of the case reaches prescribed pressure, the thin portion 16 fractures in an approximately annular shape along the groove portion 17. Accordingly, since the base portion 12 and the valve element 14 are separated from each other and the gas release vent 10 opens, gas inside the battery case can be discharged to the outside. However, in the opening of the gas release vent 10, when the thin portion 16 fractures at once along an entire periphery of the groove portion 17, since the valve element 14 is completely detached from the base portion 12, there is a possibility that the valve element 14 may scatter in all directions due to gas erupting from inside the battery case. By contrast, in the sealing plate 1 according to the present embodiment, in the groove portion 17, the remaining portion 17b is formed which is a region with a larger remaining thickness as compared to another region (hereinafter, the fracture portion 17a) of the groove portion 17. Accordingly, the thin portion 16 can be prevented from fracturing along the entire periphery of the groove portion 17 and a state where the valve element 14 is connected to the base portion 12 via the remaining portion 17b can be maintained. As a result, the valve element 14 can be prevented from being completely detached from the base portion 12 and scattered in all directions as a metallic fragment. In addition, since the thin portion 16 can be prevented from fracturing at once along the entire periphery, even if the valve element 14 is separated from the base portion 12, scattering energy (a scattering speed) thereof can be suppressed.

On the other hand, when the remaining portion 17b is formed in a part of the groove portion 17, a continuous fracture of the thin portion 16 along the groove portion 17 stops at the remaining portion 17b. Therefore, depending on a fracture start position, there is a possibility that the fracture of the thin portion is inhibited by the remaining portion and the gas release vent will fail to open sufficiently. By comparison, in the present embodiment, the remaining portion 17b is formed in a region including one intersection point IP₁ among two intersection points IP₁ and IP₂ where a straight line L which passes a center C of the gas release vent 10 and which extends in the short-side direction of the sealing plate 1 (a depth direction Y in FIG. 2) intersects the groove portion 17 with the approximately annular shape. Accordingly, inhibition of the operation of the gas release vent 10 due to forming the remaining portion 17b can be prevented. Specifically, when the internal pressure of the battery case to which the approximately rectangular sealing plate 1 is attached rises, the possibility of an occurrence on the sealing plate 1 of a bending deformation causing a ridge extending along the short-side direction Y to be formed increases. In addition, when stress generated by the bending deformation of the sealing plate 1 is applied to the gas release vent 10, a vicinity of any of the two intersection points IP₁ and IP₂ between the straight line L along the short-side direction Y and the groove portion 17 is likely to become a fracture start position. Furthermore, when the remaining portion 17b is formed in a region including one intersection point IP₁ among the two intersection points IP₁ and IP₂, the possibility that a vicinity of the other intersection point IP₂ becomes a fracture start position increases significantly. In other words, according to the present embodiment, a fracture of the thin portion 16 can be started from a position (the intersection point IP₂) which opposes the remaining portion 17b across a center C of the gas release vent 10. In this manner, by causing a fracture start point to be created at a farthest position from the remaining portion 17b in the peripheral direction, the groove portion 17 can be appropriately fractured so that only the remaining portion 17b is connected to the base portion 12 in the gas release vent 10 after activation.

As described above, with the sealing plate 1 according to the present embodiment, not only can scattering of a metallic fragment (the valve element 14) upon activation of the gas release vent 10 be suppressed but the remaining portion 17b formed as an anti-scattering measure of the valve element 14 can also be prevented from inhibiting the operation of the gas release vent 10.

A remaining thickness Tc (refer to FIG. 3) in the fracture portion 17a of the groove portion 17 is favorably appropriately adjusted in consideration of operational stability of the gas release vent 10. For example, a ratio (T_{C}/T_{T}) of the remaining thickness Tc of the fracture portion 17a with respect to the thickness T_{T} of the thin portion 16 is favorably 10% to 50% and more favorably 20% to 40%. As T_{C}/T_{T} decreases (a groove in the fracture portion 17a becomes deeper), the likelihood that a fracture of the thin portion 16 along the fracture portion 17a is to occur increases and operational stability of the gas release vent 10 tends to improve. On the other hand, as T_{C}/T_{T} increases (a groove in the fracture portion 17a becomes shallower), the likelihood that a malfunction of the gas release vent 10 is to occur decreases.

On the other hand, from the perspective of more appropriately suppressing scattering of the valve element 14, the ratio (T_{R}/T_{T}) of a remaining thickness T_{R} of the remaining portion 17b with respect to the thickness T_{T} of the thin portion 16 is favorably 50% or higher and more favorably 65% or higher. On the other hand, the remaining thickness T_{R} of the remaining portion 17b is not particularly limited as long as the remaining thickness T_{R} is thicker than the remaining thickness Tc of the fracture portion 17a. For example, from the perspective of improving an outgassing property after activation of the gas release vent 10, a groove with a certain depth is favorably formed in the remaining portion 17b. Accordingly, when the gas release vent 10 is activated, since the valve element 14 is readily rotated upward with the remaining portion 17b as a fulcrum point, an opening area of the gas release vent 10 after activation can be sufficiently secured. In consideration of the above, an upper limit value of T_{R}/T_{T} described above is favorably 99% or lower, more favorably 95% or lower, and particularly favorably 90% or lower.

In addition, a length of the remaining portion 17b in the peripheral direction is favorably 1/8 or more and 3/8 or less of a length of an entire periphery of the groove portion 17 with the approximately annular shape. Accordingly, scattering of the valve element 14 can be appropriately suppressed without significantly inhibiting the activation of the gas release vent 10. Specifically, there is a tendency that when the ratio of the remaining portion 17b with respect to the entire periphery of the groove portion 17 having the approximately annular shape increases, scattering of the valve element 14 is more readily suppressed. On the other hand, there is a tendency that when the ratio of the remaining portion 17b with respect to the entire periphery of the groove portion 17 decreases, since the gas release vent 10 more readily opens, a gas discharging ability after the gas release vent 10 is activated improves.

As shown in FIG. 3, in the present embodiment, the groove portion 17 is formed on a second surface 16b (an upper surface in FIG. 3) of the thin portion 16. However, the surface on which the groove portion may be a first surface 16a (a lower surface in FIG. 3) of the thin portion 16. Even in this case, the thin portion can be caused to fracture in an approximately annular shape along the groove portion. However, when using the sealing plate 1 according to the present embodiment in a secondary battery, the side of the first surface 16a of the thin portion 16 is to be arranged inside a case (a positive pressure side during a rise in internal pressure of the case). In consideration thereof, the annular groove portion 17 is more favorably formed on the second surface 16b to be arranged outside of the case. Accordingly, when the internal pressure of the case rises and the first surface 16a of the thin portion 16 is pressurized in a second direction (upward in the height direction Z in FIG. 3), the thin portion 16 can be caused to fracture so as to expand the groove portion 17. As a result, operational stability of the gas release vent 10 can be further improved.

In addition, the gas release vent 10 is favorably formed in a central region of the sealing plate 1 in a long-side direction X. Accordingly, since stress due to a bending deformation of the sealing plate 1 is efficiently applied to the gas release vent 10, a vicinity of the intersection point IP₂ between the annular groove portion 17 and the straight line L is likely to become a fracture start point of the thin portion 16. It should be noted that, in the present specification, a "central region of the sealing plate" refers to a region including a center point of the sealing plate in the long-side direction (a width direction X in FIG. 2). In other words, when a formation region of the gas release vent in a plan view includes the center point of the sealing plate, a description of "the gas release vent is formed in a central region of the sealing plate" can be used. Furthermore, the gas release vent of the sealing plate disclosed herein need not necessarily be formed in the central region of the sealing plate. For example, depending on various components (an electrode terminal, a sealing plug of an electrolyte injection hole, and the like) which can be attached to the sealing plate, a position where a bending deformation of the sealing plate occurs may deviate from the central region of the sealing plate. Therefore, favorably, after specifying a position where a bending deformation of the sealing plate occurs by conducting a preliminary test or the like, the position where a bending deformation of the sealing plate occurs is to be included in a formation region of the gas release vent. Accordingly, since the likelihood of the vicinity of the intersection point IP₂ between the annular groove portion 17 and the straight line L being a fracture start point of the thin portion 16 increases, inhibition of the operation of the gas release vent 10 due to providing the remaining portion 17b can be reliably prevented.

### Secondary battery

The sealing plate 1 configured as described above is a component for a secondary battery which constitutes one side wall of a battery case of the secondary battery. Hereinafter, a secondary battery using the sealing plate 1 configured as described above will be described. FIG. 4 is a perspective view schematically showing a secondary battery according to the first embodiment.

A secondary battery 100 shown in FIG. 4 includes an electrode body (not illustrated) and a battery case 20 which houses the electrode body. Although a detailed illustration will be omitted, the electrode body includes a positive electrode, a negative electrode, and a separator. For example, the electrode body can be a wound electrode body in which a band-like positive electrode and a band-like negative electrode are laminated via two band-like separators and wound around a winding axis. Other examples of a structure of the electrode body include a laminated electrode body in which a plurality of square-shaped (typically, rectangular-shaped) positive electrodes and a plurality of square-shaped (typically, rectangular-shaped) negative electrodes are stacked up in an insulated state. Since materials and structures which can be adopted in a general secondary battery (for example, a lithium-ion secondary battery) can be adopted without any particular limitations as a material and a structure of each member (such as a positive electrode, a negative electrode, and a separator) which constitutes the electrode body and since the material and the structure of each member do not limit the technique disclosed herein, a detailed description thereof will be omitted. In addition, although not illustrated, an electrolyte solution is also housed in the battery case 20. As the electrolyte solution, electrolyte solutions that can be adopted in a general secondary battery can be adopted without any particular limitations.

The battery case 20 is a casing which houses the electrode body described above. A material of the battery case 20 may be similar to those conventional used and is not particularly limited. For example, the battery case 20 is favorably a metallic battery case with prescribed strength. Examples of the material of the battery case 20 include aluminum, an aluminum alloy, iron, and an iron alloy.

As shown in FIG. 4, the battery case 20 has an external shape that is a flat and bottomed rectangular parallelopiped shape (square shape). The battery case 20 includes an outer package 22 having an opening on an upper surface thereof and the sealing plate 1 which closes the opening of the outer package 22. The outer package 22 is a box-like member including a bottom wall (not illustrated) with a rectangular planar shape, a pair of long-side walls 22a which extend along the height direction Z from long sides of the rectangular bottom wall and which oppose each other, and a pair of short-side walls 22b which extend along the height direction Z from short sides of the rectangular bottom wall and which oppose each other. In addition, an approximately rectangular-shaped opening (not illustrated) enclosed by respective upper sides of the pair of long-side walls 22a and the pair of short-side walls 22b is formed on the upper surface of the outer package 22. Furthermore, the sealing plate 1 having the gas release vent 10 configured as described above is attached to the outer package 22 so as to close the opening of the upper surface of the outer package 22 and opposes the bottom wall of the outer package 22. Moreover, the battery case 20 with a sealed (hermetically sealed) interior is constructed by joining (for example, welding) a peripheral edge of the opening of the outer package 22 and an outer peripheral edge of the sealing plate 1 to each other. For example, laser welding can be used to join the sealing plate 1 and the outer package 22 to each other.

In addition, a positive electrode terminal 30 and a negative electrode terminal 40 are attached to the sealing plate 1 of the secondary battery 100. The positive electrode terminal 30 is an elongated conductive member that extends in the height direction Z. A lower end of the positive electrode terminal 30 is connected inside the battery case 20 to the positive electrode of the electrode body. On the other hand, an upper end of the positive electrode terminal 30 is exposed to the outside of the battery case 20. The positive electrode terminal 30 is favorably constituted of aluminum, an aluminum alloy, or the like. On the other hand, the negative electrode terminal 40 has a structure that is approximately the same as that of the positive electrode terminal 30. Specifically, a lower end of the negative electrode terminal 40 is connected inside the battery case 20 to the negative electrode and an upper end of the negative electrode terminal 40 is exposed to the outside of the battery case 20. The negative electrode terminal 40 is favorably constituted by copper, a copper alloy, or the like. In addition, attachment positions of the positive electrode terminal and the negative electrode terminal are not particularly limited and the positive electrode terminal and the negative electrode terminal may be provided on a side wall of the battery case (a side wall of the outer package) other than the sealing plate. Furthermore, although not illustrated, the sealing plate 1 may be provided with an electrolyte injection hole for injecting an electrolyte solution during a manufacturing process of the secondary battery 100. Normally, the electrolyte injection hole is sealed by a prescribed sealing plug. As the sealing plug of the electrolyte injection hole, a blind rivet or the like is used.

In addition, the sealing plate 1 of the secondary battery 100 according to the present embodiment is provided with the gas release vent 10. In this case, the sealing plate 1 is arranged so that the first surface (the lower surface in FIG. 3) opposes the electrode body. In other words, in the present embodiment, the sealing plate 1 is attached so that the recessed portion 18 is arranged outside of the battery case 20. Furthermore, in the sealing plate 1 configured as described above, the remaining portion 17b is formed in a part of the groove portion 17 of the gas release vent 10. Accordingly, since a state where the valve element 14 and the base portion 12 are connected to each other via the remaining portion 17b can be maintained even after the gas release vent 10 is activated, scattering of a metallic fragment (the valve element 14) in all directions can be preferably suppressed. Moreover, by causing the remaining portion 17b and a fracture start position (the intersection point IP₂) to oppose each other across the center C of the gas release vent 10, inhibition of activation of the gas release vent 10 due to providing the remaining portion 17b can be prevented.

### Other embodiments

An embodiment (the first embodiment) of the technique disclosed herein has been described above. However, the technique disclosed herein is not limited to the embodiment described above and encompasses various embodiments. Hereinafter, other embodiments of the sealing plate disclosed herein will be described.

### (1) Second embodiment

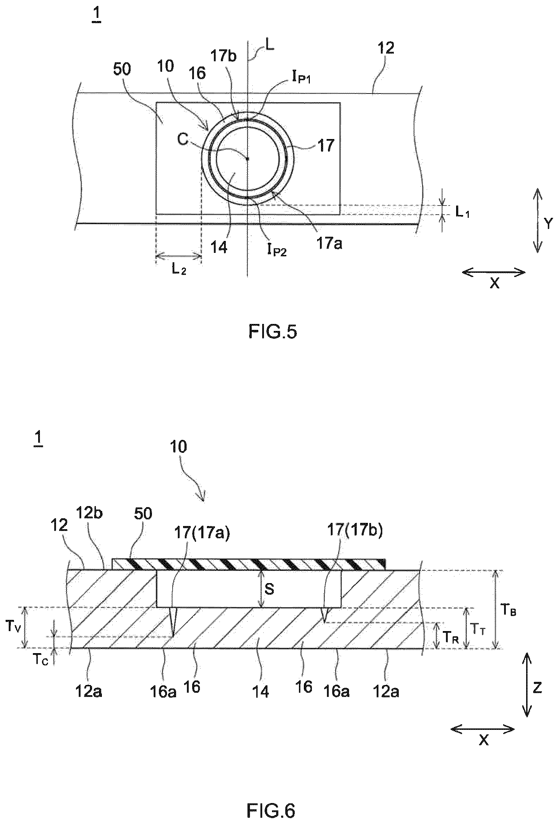

FIG. 5 is a plan view schematically showing a sealing plate according to a second embodiment. FIG. 6 is a longitudinal sectional view schematically showing the sealing plate according to the second embodiment. As shown in FIGS. 5 and 6, in the sealing plate 1 according to the present embodiment, a protective tape 50 is affixed so as to cover the gas release vent 10. Accordingly, damage and deterioration of the gas release vent 10 due to corrosive foreign objects or the like adhering to the gas release vent 10 can be prevented. Specifically, corrosion of a metallic material (for example, aluminum) which constitutes the sealing plate 1 can be promoted by bringing the metallic material into contact with a dissimilar metal (bimetallic corrosion). In addition, as described above, since the negative electrode terminal 40 constituted of copper or a copper alloy is exposed to the outside of the battery case 20 in the secondary battery 100, there is a possibility that a copper fragment detached from the negative electrode terminal 40 may adhere to the gas release vent 10. When adherence of the copper fragment causes the valve element 14 or the thin portion 16 of the gas release vent 10 to corrode and results in forming a hole, there is a risk that an electrolyte solution may flow out from inside the battery case 20 or water may penetrate into the battery case 20. Conversely, by affixing the protective tape 50 so as to cover the gas release vent 10, corrosion of the gas release vent 10 due to adherence of a copper fragment or the like can be prevented.

As the protective tape 50, a configuration in which a pressure-sensitive adhesive is applied to a surface of a film-like base material can be adopted. Conventional and known materials can be used without any particular limitations as the base material of the protective tape 50 as long as corrosion of the sealing plate 1 and the gas release vent 10 is not promoted. For example, the base material of the protective tape 50 is favorably constituted of a resin material such as polypropylene (PP) or polyethylene terephthalate (PET), a same metallic material (such as aluminum) as the sealing plate 1, or the like. In a similar manner, as the pressure-sensitive adhesive, various pressure-sensitive adhesives can be used without any particular limitations as long as corrosion of the sealing plate 1 and the gas release vent 10 is not promoted. As examples of the pressure-sensitive adhesive, a rubber pressure sensitive adhesive, an acrylic pressure sensitive adhesive, a silicon pressure sensitive adhesive, and the like can be used.

In addition, in the present embodiment, as shown in FIG. 5, a length L₁ of the protective tape 50 affixed to a region outside of the gas release vent 10 in the short-side direction Y of the sealing plate 1 is favorably shorter than a length L₂ of the protective tape 50 affixed to a region outside of the gas release vent 10 in the long-side direction X of the sealing plate 1. Accordingly, the protective tape 50 can be peeled off in an efficient manner when the gas release vent 10 is activated. Specifically, when the internal pressure of the case rises significantly in the present embodiment, the thin portion 16 fractures along the fracture portion 17a of the groove portion 17 and, at the same time, the valve element 14 is pushed upward by gas discharged from inside the battery case. In addition, since the valve element 14 is connected to the base portion 12 via the remaining portion 17b, the valve element 14 rotates upward with the remaining portion 17b as a fulcrum point. At this point, when the affixing length L₁ of the protective tape 50 in the short-side direction Y is set shorter than the affixing length L₂ of the protective tape 50 in the long-side direction X, since the protective tape 50 can be pushed upward and readily peeled off by the valve element 14 having rotated upward, a decline in gas discharging ability due to the protective tape 50 can be prevented.

It should be noted that the length L₁ in the configuration described above is favorably a "length of the protective tape 50 affixed to a region opposing the remaining portion 17b across the center C of the gas release vent 10 (in other words, a region in proximity of the fracture start position (the intersection point IP₂)) among regions on both outer sides of the gas release vent 10 in the short-side direction Y of the sealing plate 1". In addition, the length L₂ in the configuration described above is favorably a "length of the protective tape 50 in a region with a short affixing margin of the protective tape 50 among regions on both outer sides of the gas release vent 10 in the long-side direction X of the sealing plate 1". Setting the lengths L₁ and L₂ of the protective tape 50 described above enables the protective tape 50 to be peeled off in an efficient manner when the gas release vent 10 is activated.

In addition, as shown in FIG. 6, a gap S with a height of 1 mm or more is favorably formed between the thin portion 16 and the protective tape 50. Accordingly, when the gas release vent 10 expands during normal use before desired internal pressure of the case is reached, the protective tape 50 can be prevented from being pushed upward and peeled off by the expanded gas release vent 10. On the other hand, an upper limit of the height of the gap S is not particularly limited and may be 5 mm or less, 3 mm or less, or 2 mm or less.

Furthermore, a slit may be formed in the protective tape 50. Accordingly, when the gas release vent 10 is activated, the protective tape 50 can be fractured by the valve element 14 which rotates upward. As a result, a decline in gas discharging ability due to the protective tape 50 can be appropriately prevented. In addition, a shape of the slit in a plan view is not particularly limited and various shapes can be adopted depending on an object of the slit. For example, the slit of the protective tape 50 favorably has a dashed-line shape formed approximately parallel to a short side surface. Accordingly, the protective tape 50 can be readily fractured when the gas release vent 10 is activated.

### (2) Third embodiment

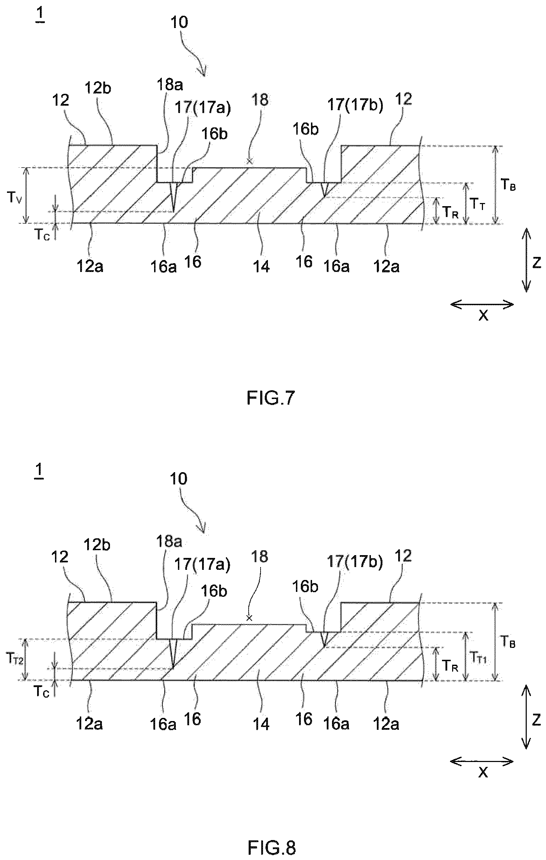

FIG. 7 is a sectional view schematically showing a sealing plate according to a third embodiment. In the first embodiment, the gas release vent 10 is formed in which the thickness T_{T} of the thin portion 16 and the thickness Tv of the valve element 14 are approximately the same (refer to FIG. 3). However, as shown in FIG. 7, the thickness Tv of the valve element 14 may be equal to or thicker than the thickness T_{T} of the thin portion 16. Accordingly, since a second moment of area of the valve element 14 becomes larger than a second moment of area of the thin portion 16 and stress applied to the gas release vent 10 when internal pressure of the case rises concentrates on the thin portion 16 around the groove portion 17, a fracture of the thin portion 16 along the groove portion 17 more readily occurs. A ratio (T_{V}/T_{T}) of the thickness Tv of the valve element 14 with respect to the thickness T_{T} of the thin portion 16 in the present embodiment is favorably 100% or higher, more favorably 500% or higher, and particularly favorably 900% or higher. Accordingly, stress can be more readily concentrated on the thin portion 16. On the other hand, an upper limit value of T_{V}/T_{T} is not particularly limited and may be 3000% or lower or 1500% or lower.

### (3) Fourth embodiment

FIG. 8 is a sectional view schematically showing a sealing plate according to a fourth embodiment. In the first embodiment, the thin portion 16 of which the thickness T_{T} is approximately the same in a peripheral direction is formed (refer to FIG. 3). However, as shown in FIG. 8, the thickness of the thin portion 16 in the peripheral direction need not be constant. Specifically, the gas release vent 10 according to the present embodiment is formed so that a thickness T_{T1} of a thin portion 16b adjacent to the remaining portion 17b is thicker than a thickness T_{T2} of the thin portion 16b adjacent to another region (the fracture portion 17a) of the groove portion 17. Accordingly, the thin portion 16b along the fracture portion 17a of the groove portion 17 fractures more readily and, at the same time, the thin portion 16b in the vicinity of the remaining portion 17b fractures less readily. As a result, both operational stability of the gas release vent 10 and suppression of scattering of the valve element 14 can be realized at higher levels.

A ratio (T_{T2}/T_{T1}) of a thickness T_{T2} of the thin portion 16b adjacent to the fracture portion 17a with respect to a thickness T_{T1} of the thin portion 16b adjacent to the remaining portion 17b is favorably 20% to 100% and more favorably 25% to 50%. Accordingly, both operational stability of the gas release vent 10 and suppression of scattering of the valve element 14 can be realized at even higher levels. In addition, a shape of a boundary between the thin portion 16b adjacent to the remaining portion 17b which is relatively thick and the thin portion 16b adjacent to the fracture portion 17a which is relatively thin is not particularly limited. For example, a step or an inclined surface may be formed at the boundary between the thin portions 16b with different thicknesses.

### (4) Fifth embodiment

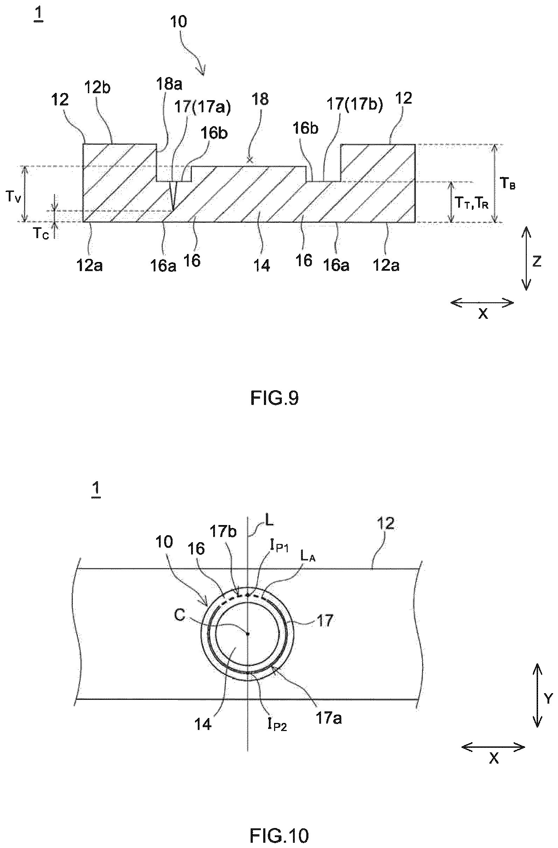

FIG. 9 is a sectional view schematically showing a sealing plate according to a fifth embodiment. In addition, FIG. 10 is a plan view schematically showing the sealing plate according to the fifth embodiment. The sealing plate 1 according to the first embodiment is configured so that the remaining thickness T_{R} of the remaining portion 17b is thinner than the thickness T_{T} of the thin portion 16 adjacent to the remaining portion 17b (refer to FIG. 2). However, the remaining thickness T_{R} of the remaining portion 17b is not particularly limited as long as the remaining thickness T_{R} is thicker than the remaining thickness Tc of the fracture portion 17a. For example, as shown in FIG. 9, the remaining thickness T_{R} of the remaining portion 17b may be the same as the thickness T_{T} of the thin portion 16 adjacent to the remaining portion 17b (T_{R}/T_{T} = 100%). Accordingly, a fracture of the thin portion 16 along the entire periphery and scattering of the valve element 14 can be more appropriately suppressed. In addition, from the perspective of more appropriately suppressing scattering of the valve element 14, the remaining thickness T_{R} of the remaining portion 17b may be made thicker than the thickness T_{T} of the thin portion 16. In other words, an upper limit value of T_{R}/T_{T} may be 120% or lower, 110% or lower, or 100% or lower.

It should be noted that when the thickness T_{R} of the remaining portion 17b is made equal to or thicker than the thickness T_{T} of the thin portion 16 as in the present embodiment, as shown in FIG. 10, the gas release vent 10 is formed in which the groove portion 17 is broken in a region where the remaining portion 17b is formed. In the present specification, an outer shape of the partially-broken groove portion 17 is to be determined by an auxiliary line L_{A} (a dotted line in FIG. 9) having been drawn so as to complement the broken region in accordance with a shape of a remaining portion (the fracture portion 17a) of the groove portion 17. In other words, as shown in FIG. 10, when an upper part is broken and the remaining fracture portion 17a has an approximately annular shape, the external shape of the groove portion 17 is determined by drawing a circular auxiliary line L_{A} along the approximately annular fracture portion 17a. Furthermore, an intersection point IP₁ between the auxiliary line L_{A} and the straight line L extending in the short-side direction of the sealing plate can be adopted as one of the two intersection points which can be fracture start points.

### (5) Other modes

A planar shape of the gas release vent 10 in each of the first to fifth embodiments described above is an approximately circular shape. However, the planar shape of the gas release vent 10 is not particularly limited and various shapes can be adopted without any particular limitations. For example, the planar shape of the gas release vent 10 may be an elliptical shape or a polygonal shape (for example, a quadrangle or a pentagon). In addition, a planar shape of each component that forms the gas release vent 10 is also not particularly limited. For example, in each of the embodiments described above, the approximately annular groove portion 17 is formed on a surface of the annular thin portion 16 and the approximately circular valve element 14 is formed inside the approximately annular groove portion 17. However, a groove portion may be formed on a surface of a rectangular annular thin portion 16 and an approximately circular valve element may be formed inside the groove portion with the approximately annular shape. Alternatively, a rectangular annular groove portion may be formed on a surface of an annular thin portion and an approximately square valve element may be formed inside the rectangular annular groove portion. However, as described above, from the perspective of suppressing a variation in working pressure of the gas release vent, the planar shape of each component is favorably an approximately circular shape as in each of the embodiments described above.

Embodiments of the technique disclosed herein have been described above. However, it should be understood that the description presented above is merely illustrative and is not intended to limit the scope of claims. Techniques described in the scope of claims include various modifications and changes made to the specific examples exemplified in the description presented above.

## Claims

1. A sealing plate (1) for a secondary battery (100), the sealing plate (1) being a plate-shaped member with an approximately rectangular shape in a plan view which closes an opening of an outer package (22) and which is provided with a gas release vent (10), wherein
the gas release vent (10) includes:
a base portion (12) with a flat plate shape;
a thin portion (16) of which a thickness is thinner than a thickness of the base portion (12);
a groove portion (17) with an approximately annular shape formed on a surface of the thin portion (16); and
a valve element (14) formed inside the groove portion (17) with the approximately annular shape,
the groove portion (17) has a remaining portion (17b) which is a region with a larger remaining thickness as compared to another region of the groove portion (17), and
the remaining portion (17b) is formed in a region including one intersection point (IP₁) among two intersection points (IP₁, IP₂) where a straight line which passes a center of the gas release vent (10) and which extends in a short-side direction of the sealing plate (1) intersects the groove portion (17).

2. The sealing plate (1) according to claim 1, wherein a protective tape (50) is affixed so as to cover the gas release vent (10).

3. The sealing plate (1) according to claim 2, wherein a length L₁ of the protective tape (50) affixed to a region outside of the gas release vent (10) in the short-side direction of the sealing plate (1) is shorter than a length L₂ of the protective tape (50) affixed to a region outside of the gas release vent (10) in a long-side direction of the sealing plate (1).

4. The sealing plate (1) according to claim 2 or 3, wherein a gap (S) with a height of 1 mm or more is formed between the thin portion (16) and the protective tape (50).

5. The sealing plate (1) according to any one of claims 1 to 4, wherein a length of the remaining portion (17b) in a peripheral direction is 1/8 or more and 3/8 or less of a length of an entire periphery of the groove portion (17).

6. The sealing plate (1) according to any one of claims 1 to 5, wherein a remaining thickness of the remaining portion (17b) is thicker than the thickness of the thin portion (16) that is adjacent to the remaining portion (17b).

7. The sealing plate (1) according to claim 6, wherein a thickness of the thin portion (16) that is adjacent to the remaining portion (17b) is thicker than the thickness of the thin portion (16) that is adjacent to another region of the groove portion (17).

8. The sealing plate (1) according to any one of claims 1 to 7, wherein a planar shape of the thin portion (16) is approximately annular, a thickness of the valve element (14) is equal to or thicker than the thickness of the thin portion (16), and a second moment of area of the valve element (14) is larger than a second moment of area of the thin portion (16).

9. A secondary battery (100) comprising an electrode body including a positive electrode and a negative electrode, and a battery case (20) housing the electrode body, wherein
the battery case (20) includes:
an outer package (22) which is a flat square container of which one face is an opening; and
a sealing plate (1) with a rectangular planar shape which closes the opening of the outer package (22), and
the sealing plate (1) is the sealing plate (1) according to any one of claims 1 to 8.
